# EUROPEAN PATENT APPLICATION

(11) **EP 4 703 936 A1**
(43) Date of publication of application: **04.03.2026**
(21) Application number: 24196393.3
(22) Date of filing: 26.08.2024
(51) Int. Cl.: G06F 21/60, G06F 21/62, H04L 9/00, H04L 9/40

(54) **WORKFLOW-AWARE ACCESS CONTROL FOR INDUSTRIAL METAVERSE**

(71) Applicant: Siemens Aktiengesellschaft, 80333 München (DE)
(72) Inventor: Pizzamiglio, Giacomo, 80339 München (DE); Stahnke, Susanne, 84547 Emmerting (DE)
(74) Representative: Siemens Patent Attorneys

(57) **Abstract**

Embodiments of the present disclosure provide a system and method for providing workflow-aware access control to a metaverse platform. The system may comprise: one or more processors; and a memory, the memory storing computer-readable instructions that, when executed by one or more of the processors, cause the one or more of the processors to implement: a client layer providing a user interface for defining and managing access control policies for one or more users; a cloud layer housing core on-chain and off-chain components for policy enforcement and dynamic updates; and a metaverse layer comprising connectors and services within the metaverse platform to ensure consistent application of access control policies across assets and interactions between the one or more users; wherein the instructions, when executed by the one or more of the processors, further cause the one or more of the processors to: receive, from a consumer user, a request to access one or more assets of the metaverse platform hosted by a provider user; compile, by each of the consumer user and the provider user, a policy template, to obtain a first compiled template and a second compiled template; sign, by the consumer user, the first compiled template and signing, by the provider user, the second compiled template; deploy the first signed template and the second signed template as one or more smart contracts in the cloud layer; in response to the one or more smart contracts being executed, update one or more access control lists, ACLs, of a server hosting the one or more assets of the metaverse platform; and grant, to the consumer user, access to the server hosting the one or more assets of the metaverse platform.

## Description

### TECHNICAL FIELD

The non-limiting and exemplary embodiments of the present disclosure generally relate to effective management and enforcement of dynamic, workflow-aware access control (WFAC) policies in a multi-party, industrial metaverse environment.

### BACKGROUND

A decentralized industrial metaverse environment setting necessitates an innovative approach to access control that can adapt to the complexities and fluidity inherent in virtual interactions within the industrial metaverse.

Existing access control mechanisms often fall short in terms of flexibility and dynamism, struggling to accommodate the vast array of situations, agreements, and workflows that involve multiple parties in the metaverse. This results in a suboptimal system that hinders effective policy definition, deployment, and enforcement.

Furthermore, the advancement of metaverse technologies and platforms hinges on efficient cross-company collaboration. Such collaboration is not only integral to the evolution of metaverse technology, but it is also one of the primary benefits offered by the adoption of metaverse in industrial settings. Rigid and simplistic conventional access control systems implemented by existing metaverse platforms are inadequate for fostering the metaverse's technological progress or for fully leveraging the technology's benefits.

Managing and enforcing access control policies in the metaverse has been handled in a few traditional ways. The most common approach is Centralized Server Control, where a central authority or server controls access permissions to various digital assets. This is simple and straightforward, but it lacks flexibility and does not scale well in a multi-party environment. It also creates a single point of failure and can become a bottleneck in large systems. Furthermore, it does not help establish trust between businesses as a distributed and peer-to-peer system would do.

Another approach is Role-Based Access Control (RBAC), in which users are assigned roles, and access permissions are then assigned to these roles. For example, this is the case with the current NVIDIA Omniverse^{™} access control mechanism, wherein Omniverse Nucleus is the database and collaboration engine of Omniverse^{™}. With Nucleus, teams can have multiple users connected together live across several applications all at once. This fosters users to use the application(s) they are the most comfortable and quickest with and allows for rapid iteration. Nucleus offers a set of fundamental services that allow a variety of client applications, renderers, and microservices all to share and modify representations of virtual worlds together. This approach is more flexible and scalable than centralized control, but it is still relatively static and rigid, lacking the dynamic and fine-grained control needed by in the metaverse.

Similarly, Attribute-Based Access Control (ABAC) is more flexible and dynamic than RBAC, as it assigns access permissions based on user attributes, resource attributes, environment conditions, and defined policies. However, ABAC can be complex and computationally intensive, especially in large systems with many users and resources.

Despite the availability of the mentioned general approaches for access control for metaverse environments, there continues to be a need for improved approaches for workflow access control within metaverse environments.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Embodiments of the present disclosure are generally directed to solutions that enable efficient workflow-aware access control (WFAC) policies in a multi-party, industrial metaverse environment. Currently, no existing system implements a solon that provides the combination of dynamic, workflow-aware access control, cross-platform compatibility, and blockchain-based transparency, security, and traceability offered by the present disclosure.

One or more embodiments include a system and a computer-implemented method for providing workflow-aware access control to a metaverse platform. The system may comprise: one or more processors; and a memory, the memory storing computer-readable instructions that, when executed by one or more of the processors, cause the one or more of the processors to implement: a client layer providing a user interface for defining and managing access control policies for one or more users; a cloud layer housing core on-chain and off-chain components for policy enforcement and dynamic updates; and a metaverse layer comprising connectors and services within the metaverse platform to ensure consistent application of access control policies across assets and interactions between the one or more users. The instructions, when executed by the one or more of the processors, may further cause the one or more of the processors to: receive, from a consumer user, a request to access one or more assets of the metaverse platform hosted by a provider user; compile, by each of the consumer user and the provider user, a policy template, to obtain a first compiled template and a second compiled template; sign, by the consumer user, the first compiled template and signing, by the provider user, the second compiled template; deploy the first signed template and the second signed template as one or more smart contracts in the cloud layer; in response to the one or more smart contracts being executed, update one or more access control lists, ACLs, of a server hosting the one or more assets of the metaverse platform; and grant, to the consumer user, access to the server hosting the one or more assets of the metaverse platform.

Thus, the system described above provides an efficient WFAC mechanism for managing permissions based on workflow stages, granting or revoking access to resources depending on the process' needs, so that enhanced operational efficiency and security within a metaverse environment is improved. In addition, the WFAC mechanism leverages the power of smart contracts to enable dynamic and flexible access control where users can choose templates and fill them with metadata, allowing for highly customizable access control mechanism tailored to specific needs. Furthermore, since every transaction and permission change is recorded on a blockchain, an unalterable and transparent history of actions is provided. This feature enhances trust and accountability in collaborative environments. Moreover, the system according to the present disclosure provides several points where open interfaces can allow to add new modules to extend the functionalities of the present WFAC mechanism. For example, an automated accountability mechanism can be plugged in the blockchain used by the WFAC mechanism.

In some embodiments, the client layer may comprise a navigator client configured for managing policy templates and asset metadata. This feature allows users to easily create, modify, and manage policies and metadata through a unified interface, reducing complexity and administrative overhead. Consequently, it enhances the overall operational efficiency, ensuring that access control policies are consistently and accurately applied across the system.

In some embodiments, the cloud layer may comprise a central manager configured for processing one or more client requests, coordinating one or more repository and enforcer operations, and synchronizing with one or more external systems; a policy repository for storing one or more policy templates and asset metadata; and a policy enforcer for executing one or more smart contracts and updating one or more ACLs. The central manager enhances operational efficiency by processing client requests, coordinating repository and enforcer operations, and synchronizing with external systems. The policy repository provides a secure and organized storage solution for policy templates and asset metadata, ensuring easy accessibility and management. Finally, the policy enforcer ensures the reliable execution of smart contracts and the accurate updating of Access Control Lists (ACLs), thereby maintaining robust security and compliance. Collectively, these components work in synergy to deliver a scalable, secure, and efficient access control management system.

In some embodiments, the policy repository may comprise a repository manager for managing data flow within the policy repository; a templates database for storing policy templates; and a metadata database for storing asset metadata. The repository manager oversees the data flow, ensuring seamless and organized data transactions within the policy repository. By maintaining distinct databases for policy templates and asset metadata, the system enhances data organization and retrieval efficiency.

In some embodiments, the policy enforcer may comprise a controller for managing ACLs of the provider user; a participant node for interacting with the blockchain; and a domain node for connecting parties within an agreement. Thus, the policy enforcer offers comprehensive and integrated management of access control and blockchain interactions. The controller ensures precise and effective management of ACLs for provider users, enhancing security and customization. The participant node facilitates seamless interaction with the blockchain, ensuring the integrity, transparency, and immutability of transactions and permissions. The domain node enables efficient and secure connections between parties within an agreement, fostering trust and collaboration. Together, these components deliver a robust and cohesive system for managing access control and contractual relationships in a secure and transparent manner.

In some embodiments, the one or more smart contracts may be collaboratively established by the consumer user and the provider user and enforced using a hybrid on-chain/off-chain system leveraging blockchain technology. By allowing smart contracts to be collaboratively established by both consumer users and provider users, the system ensures that the terms are mutually agreed upon, which fosters trust and reduces the potential for disputes. The use of a hybrid on-chain/off-chain system leveraging blockchain technology optimizes the performance and scalability of the smart contracts. Critical contract terms and conditions can be recorded on-chain for immutability and transparency, while less critical data can be processed off-chain to reduce blockchain congestion and transaction costs. This hybrid approach balances security and efficiency, making the system more adaptable to various use cases and workloads.

In some embodiments, the access control policies may comprise one or more of: dynamic and context-sensitive policies, adjusting permissions based on workflow state, user role, type of resources. This approach allows the system to tailor access controls in real-time according to the specific context and requirements of the situation. For example, permissions can be dynamically adjusted as a project progresses through different workflow states, ensuring that only authorized users have access to sensitive resources at appropriate times. Additionally, by considering user roles and resource types, the system can enforce more granular and relevant access controls, reducing the risk of unauthorized access and enhancing overall security. This flexibility and specificity lead to a more secure, efficient, and user-friendly access control system.

In some embodiments, the instructions, when executed by the one or more of the processors, may further cause the one or more of the processors to record every transaction and permission change on a blockchain. Recording all transactions and permission changes on a blockchain ensures that there is a tamper-proof, immutable ledger of all activities, which significantly reduces the risk of fraud and unauthorized alterations.

In some embodiments, the central manager may be configured to synchronize one or more operations between local systems and external systems associated with other parties in an agreement. Such synchronization ensures that all parties involved in an agreement are consistently operating with the most up-to-date information, reducing the risk of discrepancies, miscommunications, or delays.

In some embodiments, the one or more users may act as both providers and consumers of resources within the metaverse. This dual-role capability encourages greater user engagement and participation, as individuals can seamlessly transition between consuming resources and offering their own resources, services, or content. It fosters a more balanced and equitable environment where users can benefit from both utilizing and contributing to the metaverse, enhancing the overall value and richness of the virtual space.

Other embodiments include a computer-implemented method for providing workflow-aware access control to a metaverse platform. The method may comprise: receiving, from a consumer user, a request to access one or more resources of the metaverse platform hosted by a provider user; compiling, by each of the consumer user and the provider user, a policy template, to obtain a first compiled template and a second compiled template; signing, by the consumer user, the first compiled template and signing, by the provider user, the second compiled template; deploying the first signed template and the second signed template as a smart contract; in response to the smart contract being executed, updating one or more access control lists of a server hosting the one or more resources of the metaverse platform; and granting, to the consumer user, access to the server hosting the one or more resources of the metaverse platform.

Other embodiments include a computer-readable storage medium storing instructions which when executed by one or more processors, cause the one or more processors to perform the method according to any one of the methods described above.

Other embodiments include a computer program product comprising instructions which when executed by at least one processor, cause the at least one processor to perform the method according to any one of the methods described above.

### BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:

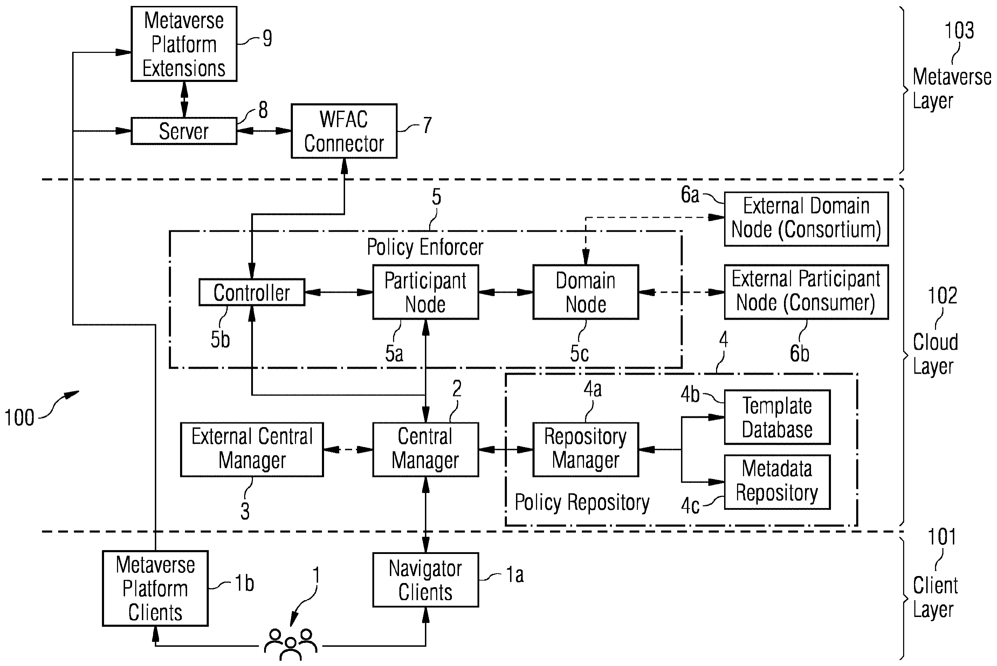

Figure 1 is a schematic diagram illustrating an example system, according to one or more embodiments of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

Figure 1 is a schematic diagram illustrating an example system (100) for providing workflow-aware access control to a metaverse platform, according to one or more embodiments of the present disclosure. The architecture according to the present disclosure melds conventional elements with specially crafted modules and connections. For example, within the architectural drawing, established components such as the Metaverse Platform Clients (1b), some blockchain-specific modules, and one or more servers (8) are provided. The system (100) is advantageous through interlinking the technologies mentioned below to implement a WFAC mechanism. Absent the overarching design of Figure 1, said standalone technologies would fall short of delivering the envisioned functionalities.

The present disclosure aims at enforcing dynamic, flexible, and granular access control within a metaverse environment (e.g., an industrial metaverse). In a realm where multi-party collaborations and resource sharing are commonplace, this system (100) aspires to be the backbone that ensures seamless interaction across diverse workflows and contexts, while upholding the sanctity of business secrets and proprietary information. The goal is to create a system (100) that allows entities (i.e., users (1)) to collaborate with trust, knowing that their data and resources are protected by a robust and adaptive access control mechanism and reducing the pains involved in multi-party workflows.

In an example embodiment, the present disclosure introduces a system (100) that implements Workflow-Aware Access Control (WFAC) tailored for the industrial metaverse. This system (100) empowers parties to define, sign, and automatically enforce policies for resources within the metaverse in a workflow and context-aware fashion. This ensures that policies are not only automatically enforced but also dynamically updated based on the evolving context of interactions. Furthermore, the system (100) is designed to establish trust among parties and enhance the overall security of the metaverse. The WFAC mechanism of the system (100) enhances and broadens the collaboration and security capabilities of the industrial metaverse. This system (100) is characterized by components stationed externally in a cloud, adjacent to the metaverse platform, while also extending its reach within the metaverse itself. This system's (100) architecture is spread across three distinct layers:
- Client Layer (101): This is the front-end layer where all users' interactions take place. It serves as the interface through which users (e.g., users (1)) can define and manage their access control policies.
- Cloud Layer (102): Positioned alongside conventional metaverse platforms (e.g., such as NVIDIA Omniverse^{™} components), this layer houses the core on-chain and off-chain components of the system. It is responsible for policy enforcement, dynamic updates, and ensuring seamless integrations with the metaverse platform.
- Metaverse Layer (103): This layer consists of connectors and services (such as the WFAC Connector (7) and Metaverse Platform Extensions (9)) that are directly installed within the metaverse platform, that acts as the bridge between the cloud layer and the metaverse. They ensure that access control policies are consistently applied across all resources and interaction within the metaverse. This is also the realm where the actual metaverse platform is deployed.

WFAC is a type of access control mechanism that considers a specific workflow or process that is being performed when deciding whether to grant or deny access to a consumer user. Unlike traditional access control mechanisms, which are typically static and based on predefined rules, WFAC is dynamic and context sensitive. It may adjust permissions based on the state of the workflow, the role of the user (1), the nature of the data or resources being accessed, and other relevant factors. In the context of the proposed architecture, the WFAC system (100) uses smart contracts to define flexible, dynamic access control policies (i.e., snippets). These policies can be collaboratively established by the parties involved and are enforced using a hybrid on-chain/off-chain system that leverages the transparency, immutability, and security of blockchain technology. This allows for a highly flexible, secure, transparent access control system and highly auditable.

The metaverse layer (103) may be implemented on powerful, multi-GPU, real-time simulation and collaboration platforms for 3D production pipelines. It may be built around advanced rendering technologies (such as for example NVIDIA RTX technology) and may support a wide variety of industry-standard software. The metaverse platform allows different stakeholders to work together in a shared virtual space, enabling collaborative design and development processes across different software applications and geographical locations. It offers live physics, real-time ray tracing, materials based on Al, and other advanced data-based features, enabling users to create highly realistic virtual environments. It is already well integrated withing industry standard software for simulation and planning. The metaverse platform may include Software Development Kits (SDKs), connectors, and applications that allow users to connect, transform, and visualize data from a variety of sources. Metaverse servers (such as server (8)) enable collaboration and simulation capabilities of the platform. For example, server (8) may be deployed both in companies' workstations and cloud infrastructures.

The WFAC Mechanism described herein for an industrial metaverse is structured around a three-tiered architecture, comprising a Client Layer (101), the Cloud Layer (102), and the Metaverse Layer (103).

The Client Layer (101) serves as the primary interaction point for parties and client interfaces. This layer is the domain where parties (e.g., users (1)) engage with the system and with one another, adopting roles as providers, consumers, or even both. These interactions can manifest in various forms, be it individual, federated, or consortium based. For example, at its core, parties can be categorized into two main roles:
- Providers: These are entities that own resources and offer shared access to them. They are responsible for creating and publishing digital assets that other entities can access. A provider might exclusively focus on granting access to its assets without necessarily accessing assets from other parties.
- Consumers: These are entities that access the metaverse platform, and the digital assets published by providers. While they primarily access resources, they don't necessarily have to publish or share their own assets. The system (100) provides the flexibility for an entity to act as a provider and as a consumer simultaneously. This dual role can be within the same interaction or span across different agreements. Furthermore, the system (100) accommodates interactions not just between individual parties but also among groups of parties. These groups can be organized and operate as consortiums or federations. For instance, a consortium of providers might collaboratively draft a single usage policy, granting access to their collective resources hosted in a server (8) under a unified agreement and workflow.

Interactions within the Client Layer (101) are facilitated through two primary types of clients:
- Navigator Clients (1a): for managing policy templates and asset metadata. They offer functionalities that allow users to publish, browse, fill out, and sign templates. Acting as the primary interface for policy management, navigator clients (1a) foster agreement and understanding between parties.
- Metaverse Platform Clients (1 b): These applications comprise a diverse set of software solutions designed to directly interface with the server (8) where the metaverse assets are hosted. The Metaverse Platform Clients (1b) may be native clients (such as Omniverse View, which is adapted for visualizing Universal Scene Description (USD) scenes). Additionally, these are third-party applications that can integrate with the server (8). A notable example are Siemens Xcelerator^{™} platforms, which can be connected to the server (8).

Cloud Layer (102) is the core of the system (100), where policies are enforced and managed. It embeds all the blockchain components and some additional repository and controllers. It may comprise a central manager (2), a policy repository (4), and a policy enforcer (5). The central manager (2) may act as a control hub, processing requests from clients, coordinating the operations of the repository (4) and the enforcer (5), evaluating policy conditions, and ensuring synchronization between the local system and external ones associated with other parties in an agreement. Its role is essential in ensuring seamless interaction between different components and maintaining the overall status of the system (100). The policy repository (4) is responsible for storing policies' templates and metadata for digital assets. This can be for a local metaverse platform provider or for other metaverses where agreements exist. Th policy repository (4) is used for maintaining the system's functionality and preserving necessary information outside the blockchain. It comprises three main components:
- Repository Manager (4a): manages the flow of data within the repository. It receives templates and metadata and directs them to the correct database. It fetches policies' templates to send them to the enforcer (5) for deployment. It also enables users to browse metadata to fill up compiled policy applications.
- Templates Database (4b): responsible for storing templates, ensuring that these are safely kept and can be easily retrieved when necessary.
- Metadata Database (4c): stores the metadata of the assets, which is essential information that provides context for the smart contracts and helps in defining the parameters of the access control policies.

The Policy Enforcer (5) runs the core blockchain functionalities of the system (100) by operating the blockchain components, including the agreement service provider (domain) and participant nodes. The enforcer (5) stores compiled templates as blockchain applications, ensuring that the code of the applications is effectively implemented and executed. Moreover, the enforcer (5) oversees calling WFAC Connector's APIs to update ACLs, implementing policy changes directly into the access control of the system (100). Controller (5b) may also be responsible for calling the APIs necessary to retrieve information about the settings of the metaverse servers (8). Policy templates are loaded in the participant node (5a) as compiled policy applications on-chain at the beginning of the interaction between providers and consumers. Users (1) can browse these templates and fill them with metadata from the Policy Repository (4), then the compiled template is deployed as active smart contract, so that each party can sign it. Upon reaching an agreement, the contract is finalized, and one or more of its directives are implemented. The Policy Enforcer (5) comprises the following key components:
- Controller (5b): this component manages the ACLs of the local metaverse platform of a provider. It interacts with the platform interface to execute the directives of the active smart contracts and retrieve information.
- Participant Node (5a): This component is used to interact with the blockchain. It can be connected to a local or remote Domain Node (5c) to access the smart contract functionalities. Through their Participant Node (5a) each party can load, browse, fill out, sign and revoke usage policies.
- Domain Node (5c): This component is used to connect parties within an agreement. It is not able to visualize nor maintain any state of the blockchain or of the interaction. The protocol implemented by this node (5c) can enforce high and granular levels of privacy: a party can see only the information that directly involves them.

The Policy Enforcer (5) may comprise a cluster of containerized applications to efficiently allow each party to configure the system (100) according to their needs. Every party needs a Participant Node (5a) to be able to interact with the blockchain and be considered a valid party. Provider systems may be configured in many ways according to the needs:
- Centralized providers must host the Domain Node (5c), the pivotal point that realizes the agreements.
- Providers that belong to a consortium (6a) are connected to one common Domain Node (5c), therefore only one central provider must deploy the Domain Node (5c).
- Providers that belong to a federation might want to connect to an external "super-partes" Domain Node (5c), therefore nobody must deploy the Domain Node (5c).
- Providers that do not directly host a server (8) with shared access do not require the Controller (5b).

The Metaverse Layer (103) is designed to seamlessly integrate with a conventional metaverse platform (such as the NVIDIA Omniverse^{™} platform). This layer is the realm where the actual metaverse is deployed, and it plays a crucial role in the enforcement and management of access control policies within the metaverse itself. The metaverse layer (103) primarily hosts the one or more servers (8), which are equipped with one or more connectors (such as the WFAC Connector (7)) and interfaces tailored for interaction with the Cloud Layer (102) of the system (100). These connectors (7) facilitate the dynamic enforcement and updating of the settings.

The one or more servers (8) form the foundation of the metaverse platform, offering the infrastructure required to host metaverses and all the digital assets. For example, server (8) may function as a primary data and collaboration engine. The one or more Connectors (WFAC Connector (7)) are the primary means of interaction between the Cloud Layer's Controller (5b) and the one or more servers (8). Through APIs realized as connectors, the Controller (5b) can efficiently manage and control the Access Control Lists (ACLs) of the servers (8). Additionally, Metaverse Platform Extensions may be installed in the metaverse platform deployment to add more functionalities, such as analytics capabilities, and may therefore take part in the interaction with the clients.

In one example configuration, the system (100) may include at least one processing unit (or processor) and memory. The processor may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. The processor may be programmable hardware capable of executing software instructions stored to implement the WFAC mechanism described herein, e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (100) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (100) may also have input device(s) such as keyboard, mouse, pen, voice input, etc. and/or output device(s) such as a display, speakers, printer, etc. Also included in the system (100) may be one or more communication connections, such as LAN, WAN, point to point, etc. In embodiments, the connections may be operable to facilitate point-to-point communications, connection-oriented communications, connectionless communications, etc. The system (100) may further include interface circuitry configured to control input and output (I/O) data paths of the system (100).

The embodiments of the present disclosure provide an approach for efficient enforcing of dynamic, flexible, and granular access control within a metaverse environment (e.g., an industrial metaverse). Having described the invention in terms of a preferred embodiment, it will be recognized by those skilled in the art that modifications and variations of the preferred embodiment are possible.

## Claims

1. A system for providing workflow-aware access control to a metaverse platform, comprising:
one or more processors; and
a memory, the memory storing computer-readable instructions that, when executed by one or more of the processors, cause the one or more of the processors to implement:
a client layer providing a user interface for defining and managing access control policies for one or more users;
a cloud layer housing core on-chain and off-chain components for policy enforcement and dynamic updates; and
a metaverse layer comprising connectors and services within the metaverse platform to ensure consistent application of access control policies across assets and interactions between the one or more users;
wherein the instructions, when executed by the one or more of the processors, further cause the one or more of the processors to:
receive, from a consumer user, a request to access one or more assets of the metaverse platform hosted by a provider user;
compile, by each of the consumer user and the provider user, a policy template, to obtain a first compiled template and a second compiled template;
sign, by the consumer user, the first compiled template and signing, by the provider user, the second compiled template;
deploy the first signed template and the second signed template as one or more smart contracts in the cloud layer;
in response to the one or more smart contracts being executed, update one or more access control lists, ACLs, of a server hosting the one or more assets of the metaverse platform; and
grant, to the consumer user, access to the server hosting the one or more assets of the metaverse platform.

2. The system of claim 1, wherein the client layer comprises a navigator client configured for managing policy templates and asset metadata.

3. The system of claim 1 or 2, wherein the cloud layer comprises:
a central manager configured for processing one or more client requests, coordinating one or more repository and enforcer operations, and synchronizing with one or more external systems;
a policy repository for storing one or more policy templates and asset metadata; and
a policy enforcer for executing one or more smart contracts and updating one or more ACLs.

4. The system of claim 3, wherein the policy repository comprises:
a repository manager for managing data flow within the policy repository;
a templates database for storing policy templates; and
a metadata database for storing asset metadata.

5. The system of claim 3 or 4, wherein the policy enforcer comprises:
a controller for managing ACLs of the provider user;
a participant node for interacting with the blockchain; and
a domain node for connecting parties within an agreement.

6. The system of any of the preceding claims, wherein the one or more smart contracts are collaboratively established by the consumer user and the provider user and enforced using a hybrid on-chain/off-chain system leveraging blockchain technology.

7. The system of any of the preceding claims, wherein the access control policies comprise one or more of: dynamic and context-sensitive policies, adjusting permissions based on workflow state, user role, type of resources.

8. The system of any of the preceding claims, wherein the instructions, when executed by the one or more of the processors, further cause the one or more of the processors to record every transaction and permission change on a blockchain.

9. The system of any of the preceding claims, wherein the central manager is configured to synchronize one or more operations between local systems and external systems associated with other parties in an agreement.

10. The system of any of the preceding claims, wherein the one or more users act as both providers and consumers of resources within the metaverse.

11. A computer-implemented method for providing workflow-aware access control to a metaverse platform, comprising:
receiving, from a consumer user, a request to access one or more resources of the metaverse platform hosted by a provider user;
compiling, by each of the consumer user and the provider user, a policy template, to obtain a first compiled template and a second compiled template;
signing, by the consumer user, the first compiled template and signing, by the provider user, the second compiled template;
deploying the first signed template and the second signed template as a smart contract;
in response to the smart contract being executed, updating one or more access control lists of a server hosting the one or more resources of the metaverse platform; and
granting, to the consumer user, access to the server hosting the one or more resources of the metaverse platform.

12. A non-transitory computer-readable storage medium storing computer-executable instructions that, when executed by one or more processors, cause the one or more processors to perform the method of claims 11.

13. A computer program product comprising instructions which when executed by at least one processor, cause the at least one processor to perform the method according to any one of claims 1 to 11.
